# EUROPEAN PATENT SPECIFICATION

(11) **EP 2 121 777 B1**
(45) Date of publication and mention of the grant of the patent: **20.04.2011**
(21) Application number: 08726274.7
(22) Date of filing: 29.02.2008
(51) Int. Cl.: C08L 33/14, C08L 21/00

(54) **CYANOACRYLATE COMPOSITIONS INCORPORATING GRAPHITE PLATELETS**
CYANACRYLAT-ZUSAMMENSETZUNGEN MIT GRAPHITPLÄTTCHEN
COMPOSITIONS CYANOACRYLATES INCORPORANT DES PLAQUETTES EN GRAPHITE

(30) Priority: 09.03.2007 US 684267
(43) Date of publication of application: 25.11.2009
(73) Proprietor: Henkel Corporation, Rocky Hill, CT 06067 (US)
(72) Inventor: SCHUENEMAN, Gregory, T., Manchester, Connecticut 06040 (US); BRANTL, Karen, R., West Springfield, Massachusetts 01089 (US); ATTARWALA, Shabbir, Simsbury, Connecticut 06070 (US); LI, Ling, Glastonbury, Connecticut 06033 (US); GRISMALA, Roger, Enfield, Connecticut 06082 (US)
(74) Representative: Kann, Wolfgang
(86) International application number: PCT/US2008/002703
(87) International publication number: WO 2008/112087

(56) References cited:
- JP-A- 2001 270 041
- US-A- 4 526 636
- US-A- 4 646 765
- US-A- 4 946 892
- US-A- 4 980 086
- CHORBADJIEV K G ET AL: "The effect of fillers upon the properties of electroconductive cyanoacrylate adhesives" 1 July 1998 (1998-07-01), INTERNATIONAL JOURNAL OF ADHESION AND ADHESIVES, ELSEVIER, PAGE(S) 143 - 146 , XP008112179 ISSN: 0143-7496 [retrieved on 2003-02-17] * the whole document *
- CHORBADZHIEV K. ET AL.: 'The effect of fillers upon the properties of electroconductive cyanoacrylate adhesives' INTERNATIONAL JOURNAL OF ADHESION AND ADHESIVES vol. 8, no. 3, pages 143 - 146, XP008112179

## Description

### BACKGROUND OF THE INVENTION

### Field of the invention

The present invention is directed to a method of improving the toughness of a cyanoacrylate composition.

### Brief Description of Related Technology

Cyanoacrylate compositions have long been known in the art as excellent adhesives. One of their primary shortcomings, however, has been their brittleness after cure.

A variety of fillers have been incorporated Into cyanoacrylate adhesive compositions to bring about certain changes In properties. U.S. Patent No. 2,794,788 teaches thickening of cyanoacrylate adhesives by dissolving therein quantities of polymeric alkyl cyanoacrylates, as well as other compounds including polyacrylates, methacrylates, and cellulose esters such as acetate, propionate, and butyrate.

U.S. Patent No. 3,836,377 notes among the additional known thickeners polyvinyl ethers such as polyvinyl methyl ether. U.S. Patent No. 3,692,752 discloses thickened cyanoacrylate solutions containing certain polyether acrylates/methacrylates, acrylic/methacrylic esters of bis(hydroxyalkyl) phosponic acid derivates, and acrylic/methacrylic esters of tris(hydroxyalkyl) cyanuric acid derivatives.

U.S. Patent No. 4,105,715 discloses a cyanoacrylate adhesive composition which incorporates powdered organic fillers such as polycarbonate, polyvinylidene fluoride, polyethylene, and acrylic block copolymer resins containing saturated elastomer segments.

U.S. Patent No. 4,440,910 discloses a cyanoacrylate adhesive composition containing elastomeric polymers such as acrylic rubbers as fillers that exhibit substantially increased strength and toughness.

U.S. Patent No. 4,660,723 discloses a cyanoacrylate adhesive composition containing a toughener such as a core-shell thermoplastic/rubber copolymer which is treated to remove impurities which cause premature polymerization of the cyanoacrylates and a compatible organic compound having one or more aryl groups to provide improved retention of peel strength and toughness.

U.S. Patent No. 5,340,873 teaches a cyanoacrylate composition where a high molecular weight polyester polymer is added therein to provide improved impact resistance and toughness with good flexibility.

U.S. Patent No. 6,822,052 discloses a cyanoacrylate adhesive composition wherein an elastomeric copolymer is added to the cyanoacrylate monomer to increase the toughness of the adhesive upon cure.

U.S. Patent No. 6,833,196 discloses a cyanoacrylate adhesive composition including an acrylic monomer toughening agent that has reduced acid generation, enhanced toughness, and faster fixturing speeds.

Despite the state of the art, there continues to be a need for cyanoacrylate adhesive compositions that exhibit enhanced peel and shear strength.

### SUMMARY OF THE INVENTION

The present invention is directed to a method of improving the toughness of a cyanoacrylate composition comprising incorporating a graphite platelet material into the cyanoacrylate composition prior to affecting cure of the cyanoacrylate composition wherein the cyanoacrylate composition includes one or more rubber tougheners and the graphite platelet material is present in the composition in amounts of about 0.1 % by weight to about 2.0% by weight based on the total weight of the cyanoacrylate composition.

In another aspect, the present invention is directed to a method of bonding two or more substrates including the steps of providing at least two substrates; applying, onto at least a portion of a surface of one or both of the at least two substrates, a cyanoacrylate composition incorporating a graphite component; contacting the surfaces of the at least two substrates having the cyanoacrylate composition therebetween; and curing the cyanoacrylate composition.

The addition of this graphite component provides a cyanoacrylate adhesive composition with enhanced physical properties, including improved shear and peel strength, fracture toughness and environmental resistance.

The graphite component may be chosen from a host of graphite materials, desirably with a purity level of at least about 95% carbon graphite, including standard purity graphite with a carbon level of about 97%, high purity graphite with a carbon level of about 99%, or combinations thereof. The graphite platelets are used resulting in compositions with greater resistance to thermal degradation and water permeability than compositions containing graphite particles; these observations are believed to be due to the larger size of the platelets than the particles.

### DETAILED DESCRIPTION OF THE INVENTION

The present invention involves a µstrengthened cyanoacrylate composition, which : includes, beyond the cyanoacrylate component, a graphite component. Depending on the nature of the graphite component, toughness is Imparted to the composition.

The cyanoacrylate compositions of the present invention include a cyanoacrylate component which includes at least one cyanoacrylate monomer. The cyanoacrylate is desirably an α-cyanoacrylate ester, such as those represented by the following structure: 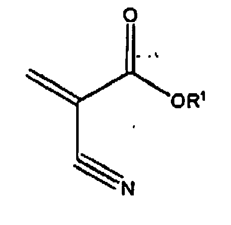 where R¹ represents a straight chain or branched chain alkyl group having 1 to 12 carbon atoms (which may be substituted with a substituent such as a halogen atom or an alkoxy group), a straight chain or branched chain alkenyl group having 2 to 12 carbon atoms, a straight chain or branched chain alkynyl group having 2 to 12 carbon atoms, a cycloalkyl group, an aralkyl group or any aryl group. Specific examples of R¹ are a methyl group, an ethyl group, an n-propyl group, an isopropyl group, an n-butyl group, an isobutyl group, a pentyl group, a hexyl group, an allyl group, a methallyl group, a crotyl group, a propargyl group, a cyclohexyl group, a benzyl group, a phenyl, group, a cresyl group, a 2-choroethyl group, a 3-choropropyl group, a 2-chorobutyl group, a trifluoroethyl group, a 2-methoxyethyl group, a 3-methoxybutyl group and a 2-ethoxyethyl group. Ethyl cyanoacrylate is a particularly desirable choice for use in the inventive compositions.

A single α-cyanoacrylate monomer or a mixture of two or more of these α-cyanoacrylate monomers can be used. Generally, the above α-cyanoacrylate monomer is used alone as an adhesive, and one or more components such as those set forth below, are used to formulate a commercial composition. The additional components include, but are not limited to, accelerators; anionic polymerization inhibitors; radical polymerization inhibitors; additives, such as plasticizers, heat stabilizers and toughening agents; fillers; and/or perfumes, dyes, and pigments. The use of these additives is well known to those skilled In the art.

A suitable amount of cyanoacrylate monomer present in the inventive compositions is from about 50 to about 99% by weight, such as 60 to 90% by weight, desirably 85% by weight to about 98% by weight, based on the total weight of the composition.

Compositions of the present invention exhibit enhanced toughness due to the inclusion of a graphite component, which provides for enhanced toughening properties when compared with corresponding compositions which do not Include such a graphite component.

The graphite component used In accordance with this invention represent a graphite platelet structure. More particularly, the graphite Is derived from mined graphite which is treated and processed so as to alter the physical structure of the graphite to form a graphite platelet structure, having specific characteristics and dimensions. For example, mined graphite may be impregnated with an add and sent through a furnace where the acid rapidly volatizes and exfoliates the graphite. Such a process is taught, for example, In U.S. Patent No. 6,129,972, the disclosure of which Is hereby expressly incorporated herein by reference. The exfoliated graphite may then be subjected to mechanical processing, such as jet milling.

The graphite component prepared through such processing, and useful in accordance with the present invention, exhibits a morphology of flakes and platelets in various shapes and sizes, having length and width dimensions generally on the order of about 1 micrometer (µm) to about 100 µm, particularly from about 2 µm to about 50 µm, such as from about 5 µm to about 20 µm, and having an average platelet thickness of less than 1 µm, particularly from about 0.1 to about 0.9 µm (i.e., ranging in the hundreds of nanometers). Such graphite platelets are distinguished from graphite particles or graphite fibers, which have morphology distinct from such graphite platelets. In particular, particles have one characteristic dimension, diameter, resulting in aspect ratios of 1 and low degrees of reinforcement per loading level. Fibers have two characteristic dimensions, diameter and length, whose quotient defines the aspect ratio of the fiber and hence the relative efficiency of reinforcement. Platelets have three characteristic dimensions, length, width and thickness, where the ratio of the two aspect ratios (w/t and l/t) Is close to unity and they have the specific advantage of maximum reinforcement at low loadings.

The graphite platelets desirably exhibit a purity level of at least about 95% carbon, desirably about 97% carbon, and more desirably about 99% carbon. Such high levels of purity may be obtained by optionally subjecting the graphite platelets to a purification treatment subsequent to the exfoliation and milling treatment in order to further purify the graphite, thereby achieving a high level of carbon content and eliminating any residual acid from the graphite platelet structure.

Examples of commercially available graphite platelet materials useful In accordance with the present invention include products available from Graftech International Ltd. (Cleveland, OH), under the product number TG-679, representing a standard purity graphite platelets having a purity of about 97% carbon; and TG-684HP, 407A, and 407B, representing high purity graphite platelets having a purity of about 99% carbon. Such materials are believed to be prepared In accordance with an acid exfoliation treatment such as that noted above, and desirably include no residual acid in the final graphite platelet product.

It is contemplated that combinations of different graphite materials may be used to confer the desired physical properties of compositions made in accordance with this invention, so long as at least a portion of the graphite component is a graphite platelet.

The graphite component is included within the composition in an amount within the range of from about 0.1% by weight to about 2.0% by weight based on the total weight of the composition, and more desirably, in an amount of about 1.0% by weight based on the total weight of the composition.

An anionic polymerization inhibitor is generally added to α-cyanoacrylate compositions to increase the stability of the composition during storage. The cyanoacrylate monomers are preferably stabilized using acid stabilizers of the Lewis or protonic types. Non-limiting examples of useful stabilizers include nitric oxide (NO), sulfur dioxide (SO₂), sulfur trioxide (SO₃), boron trifluoride (BF₃), hydrogen fluoride (HF), methane sulfonic acid (MSA), organic sultone inhibitors, aromatic sulfonic acids, aliphatic sulfonic acids, sulfones and mixtures and combinations thereof. In one particular embodiment, a stabilizer system for the present invention includes MSA and SO₂, for example, with MSA in an amount from about 5 to about 30 ppm and SO₂ in an amount of from about 2 to about 30 ppm based on the amount of the cyanoacrylate monomer. In a further embodiment, BF₃ may be added in amounts of about 5 ppm to about 50 ppm based on the amount of the cyanoacrylate monomer. Advantageously, such small amounts of stabilizers used with the composition of the present invention provide optimal performance without stability concerns.

Further, a radical polymerization inhibitor may be added to the cyanoacrylate compositions as well, in an amount from about 0.001 to 2.0%, particularly 0.03 to 0.5%, based on the total weight of the composition, for the purpose of capturing radicals which are formed by light during storage. Such inhibitors are ordinarily of the phenolic type including, for example, hydroquinone and hydroquinone monomethyl ether. Other inhibitors suitable for use herein include butylated hydroxytoluene and butylated hydroxyanisole.

A thickener may be added to Increase the viscosity of the cyanoacrylate composition; however, the graphite platelet material may exhibit a thickening effect to the composition, and therefore a thickener may not be desirable, particularly depending on the amount of graphite platelet material incorporated into the composition. Viscosities of 10,000 cps or greater are desirable to achieve dispersions of cyanoacrylate compositions with shelf life stability. When used, various materials can be useful as thickeners, and examples include poly(methyl methacrylate) (PMMA), methacrylate-type copolymers, acrylic rubbers, cellulose derivatives, polyvinyl acetate and poly(α-cyanoacrylate). A suitable amount of thickener is generally about 0.01% to about 30% by weight, desirably about 5.0% to about 25% by weight, such as about 5.0% to about 10% based on the total weight of the composition. Compositions with particularly desirable physical properties may be obtained where less than 10% PMMA thickener is used and in the absence of silica type thickeners.

The cyanoacrylate composition of the present invention further include one or more rubber tougheners. For example, rubber tougheners such as those disclosed in U.S. Patent No. 4,440,910 to O'Connor, which discloses certain organic polymers as toughening additives that are elastomeric, (i.e., rubbery) In nature, may be incorporated Into the composition. Such elastomeric polymers may be selected from, for example, copolymers of a lower alkene monomer and (i) acrylic acid esters, (ii) methacrylic acid esters or (iii) vinyl acetate. For example, the toughening additives may be one or more acrylic rubbers; polyester resins; ethylene-vinyl acetates; fluorinated rubbers; isoprene-acrylonitrile polymers; chlorosulfonated poyethylenes; and/or homopolymers of polyvinyl acetate.

The elastomeric polymers may be selected from homopolymers of alkyl esters of acrylic acid; copolymers of another polymerizable monomer, such as lower alkenes, with an alkyl or alkoxy ester of acrylic acid; and copolymers of alkyl or alkoxy esters of acrylic acid. Other unsaturated monomers which may be copolymerized with the alkyl and alkoxy esters of acrylic include dienes, reactive halogen-containing unsaturated compounds and other acrylic monomers such as acrylamides.

One group of elastomeric polymers useful in the compositions of the present invention Is copolymers of methyl acrylate and methylene, manufactured by DuPont, under the name of VAMAC, such as VAMAC N123 and VAMAC B-124. VAMAC N123 and VAMAC B-124 are reported by DuPont to be a master batch of ethylene/acrylic elastomer.

Henkel Corporation (as the successor to Loctite Corporation) has sold for a number of years since the filing of the '910 patent rubber toughened cyanoacrylate adhesive products under the trade name BLACK MAX, which employ as the rubber toughening component the DuPont materials called VAMAC B-124 and N123. Thus, these DuPont materials may be used to co-toughen the inventive composition. In addition, Henkel has sold in the past clear and substantially colorless rubber toughened cyanoacrylate adhesive products, namely, LOCTITE 4203, 4204, 4205 and 435, which employ as the rubber toughening component the DuPont material, VAMAC G and VAMAC MR. VAMAC G and VAMAC MR may be used to co-toughen the inventive composition, as well.

VAMAC VCS rubber appears to be the base rubber, from which the remaining members of the VAMAC product line are compounded. VAMAC VCS is a reaction product of the combination of ethylene, methyl acrylate and monomers having carboxylic acid cure sites, which once formed is then substantially free of processing aids such as the release agents octadecyl amine, complex organic phosphate esters and/or stearic acid, and anti-oxidants, such as substituted diphenyl amine.

Recently, DuPont has provided to the market under the trade designation VAMAC VMX 1012 and VCD 6200, which are rubbers made from ethylene and methyl acrylate. It is believed that the VAMAC VMX 1012 rubber possesses little to no carboxylic acid in the polymer backbone. Like the VAMAC VCS rubber, the VAMAC VMX 1012 and VCD 6200 rubbers are substantially free of processing aids such as the release agents octadecyl amine, complex organic phosphate esters and/or stearic acid, and anti-oxidants, such as substituted diphenyl amine, noted above.

The inventive composition may also be co-toughened with a rubber toughening component having (a) reaction products of the combination of ethylene, methyl acrylate and monomers having carboxylic acid cure sites, (b) dipolymers of ethylene and methyl acrylate, and combinations of (a) and (b), which once the reaction products and/or dipolymers are formed are then substantially free of processing aids, such as the release agents octadecyl amine (reported by DuPont to be available commercially from Akzo Nobel under the tradename ARMEEN 18D), complex organic phosphate esters (reported by DuPont to be available commercially from R.T. Vanderbilt Co., Inc. under the trade name VANFRE VAM), stearic acid and/or polyethylene glycol ether wax, and anti-oxidants, such as substituted diphenyl amine (reported by DuPont to be available commercially from Uniroyal Chemical under the tradename NAUGARD 445). Commercial examples of such rubber tougheners include VAMAC MR, VMX 1012 and VCD 6200 rubbers, and.these may be used too.

Phthalic anhydride and other plasticizers may also be added to the cyanoacrylate component to further aid in durability and impact, heat and moisture resistance. The plasticizer is preferably present in an amount of about 0.005% to about 5.0%, desirably about 0.01% to about 2.0% by weight based on the total weight of the composition.

Perfumes, dyes, pigments and the like may be added to the inventive composition depending on use purposed in amounts which do not adversely affect the stability of the cyanoacrylate monomer. The use of such additives is within the skill of those practicing in the cyanoacrylate adhesive art and need not be detailed herein.

Accelerators that may be useful in the cyanoacrylate compositions include for example calixarenes, oxacalixarenes, and combinations thereof. Of the calixarenes and oxacalixarenes, many are known, and are reported in the patent literature. See U.S. Patent Nos. 4,556,700, 4,622,414, 4,636,539, 4,695,615, 4,718,966, and 4,855,461, the disclosures of each of which are hereby expressly incorporated herein by reference.

Another potentially useful accelerator component is crown ether. A host of crown ethers are known. For instance, examples which may be used herein either individually or in combination, or in combination with the calixarenes and oxacalixarenes described above Include: 15-crown-5, 18-crown-6, dibenzo-18-crown-6, benzo-15-crown-5, dibenzo-24-crown-8, dibenzo-30-crown-10, tribenzo-18-crown-6, asym-dibenzo-22-crown-6, dibenzo-14-crown-4, dicyclohexyl-18-crown-6, dicyclohexyl-24-crown-8, cyclohexyl-12-crown-4, 1,2-decalyl-15-crown-5, 1,2-naphtho-15-crown-5, 3,4,5-naphthyl-16-crown-5, 1,2-methyl-benzo-18-crown-6, 1,2-methylbenzo-5, 6-methylbenzo-18-crown-6, 1,2-t-butyl-18-crown-6, 1,2-vinylbenzo-15-crown-5, 1,2-vinylbenzo-18-crown-6, 1,2-t-butyl-cyclohoxyl-18-crown-6, asym-dibenzo-22-crown-6 and 1,2-benzo-1,4-benzo-5-oxygen-20-crown-7. See U.S. Patent No. 4,837,260 (Sato), the disclosure of which is hereby expressly incorporated herein by reference.

Other suitable accelerators include those described in U.S. Patent No. 5,312,864 (Wenz), which are hydroxyl group derivatives of an α-, β- or γ-cyclodextrin which Is at last partly soluble in the cyanoacrylate; in U.S. Patent No. 4,906,317 (Liu), which are silacrown compounds to accelerate fixturing and cure on de-activating substrates such as wood, examples of which are within the following structure: 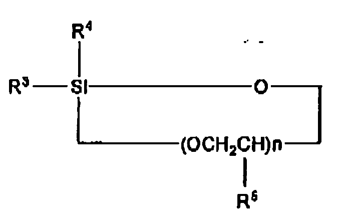 where R³ and R⁴ are organo groups which do not themselves cause polymerization of the cyanoacrylate monomer, R⁵ is H or CH₃ and n is an integer of between 1 and 4. Examples of suitable R³ and R⁴ groups are R groups, alkoxy groups such as methoxy, and aryloxy groups such as phenoxy. The R³ and R⁴ groups may contain halogen or other substituents, an example being trifluoropropyl. However, groups not suitable as R⁴ and R⁵ groups are basic groups such as amino, substituted amino and alkylamino.

Specific examples of silacrown compounds useful in the Inventive compositions include: 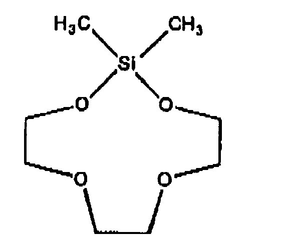 dimethylsila-11-crown4; 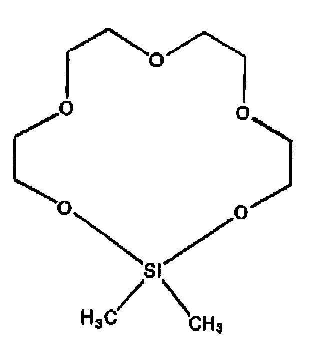 dimethylsila-14-crown-5; and 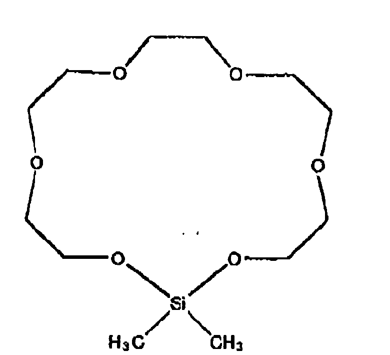 dimethylsila-17-crown-6.

The accelerator component may be included in the compositions in an amount within the range of from about 0.1 % to about 10%, with the range of about 0.5% to about 5% being desirable. See U.S. Patent Nos. 4,170,585; 4,450,265; 6,294,629; and 6,475,331, the contents of which are all Incorporated herein by reference.

The cyanoacrylate compositions of the present invention are easily prepared by adding predetermined amounts of the graphite component to the cyanoacrylate component and conducting stirring for a sufficient time and temperature to achieve a homogenous solution or suspension.

The graphite component provides the composition with a uniformly dispersed metallic grayish-block colour. As such, the graphite component acts as a pigment for the cyanoacrylate composition, thereby eliminating the need for further pigments or colorants, particularly where gray adhesive compositions are desired.

The graphite component represents a high level of pure carbon, with greater than 95% carbon purity. When this graphite component is combined with the cyanoacrylate monomer, the high levels of carbon impart a distinct color to the composition, exhibiting a very dark grey to black color.

The cyanoacrylate compositions of the present Invention are useful in bonding two or more substrates. A sufficient portion of the composition may be placed on a surface of one of the two or more substrates. The other substrate is then positioned over the cyanoacrylate composition and the two substrates contacted together to form an assembly. The assembly is then exposed to favorable cure conditions to cure the cyanoacrylate composition.

The compositions of the present invention exhibit enhanced physical properties, such as improved strength, fracture toughness and environmental resistance of the compositions when cured. Such enhancements are manifested through various physical properties, such as 180° peel strength and tensile and block shear strength, which are indicative of useful bond strengths. For example, compositions in accordance with the present invention may exhibit improvements in peel strength on the order of more than a 50% increase in peel strength when compared with compositions which do not include any graphite component, even at graphite load levels as low as 0.1%. Graphite load levels of about 1% are desirable, and provide improved peel strength of more than 400% when compared with compositions which do not Include any graphite component. With toughened cyanoacrylate compositions including rubber modifiers, improvements In peel strength on the order of more than a 35% increase may be exhibited when compared with compositions which do not include any graphite component, particularly with graphite load levels of about 1 %.

Improvements in block shear strength on the order of increases of more than 40% when compared with compositions which do not include any graphite component may be exhibited, particularly with graphite load levels of about 1%. Significant Increases in fracture toughness may also be exhibited, on the order of greater than 100% increase in fracture toughness when compared with compositions which do not include any graphite component, particularly with graphite load levels of about 1%. Still further, improvements In environmental resistance may be exhibited on the order of an increase in lap shear strength of more than 20% after exposure to environmental aging conditions, when compared with compositions which do not include any graphite component, particularly with graphite load levels of about 1%.

The following examples are intended to illustrate, not limit, the invention.

### EXAMPLES

### EXAMPLE 1

Cyanoacrylate compositions identified as Samples 1-13 were prepared by incorporating varying amounts of graphite platelet materials into cyanoacrylate compositions, as set forth in Table 1.

The compositions were prepared by adding the Indicated amount of graphite platelet material to the identified cyanoacrylate component, with mild heating if necessary, with the composition stirred until the graphite platelet material was homogenously dispersed within the composition.

**TABLE 1**

| **COMPONENT** | **SAMPLE NO.** | | | | | | | | | | | | |
|---|---|---|---|---|---|---|---|---|---|---|---|---|---|
| | **1*** (%) | **2*** (%) | **3*** (%) | **4*** (%) | **5*** (%) | **6*** (%) | **7** (%) | **8** (%) | **9** (%) | **10** (%) | **11** (%) | **12** (%) | **13** (%) |
| Cyanoacrylate component¹ | 99.9 | 99.5 | 99 | 97.5 | 95 | 99 | - | - | - | - | - | - | - |
| Cyanoacrylate component² | - | - | - | - | - | - | 99 | 99.9 | 99.75 | 99.5 | 99.25 | 99 | 98 |
| Standard purity graphite platelet³ | 0-1 | 0.5 | 1 | 2.5 | 5 | - | 1 | - | - | - | - | - | - |
| High purity graphite platelet⁴ | | | | | | 1 | - | 0.1 | 0.25 | 0.5 | 0.75 | 1 | 2 |

| | | | | | | | | | | | | | |
|---|---|---|---|---|---|---|---|---|---|---|---|---|---|
| 1. Stabilized ethyl cyanoacrylate based one-part adhesive composition, commercially available as LOCTITE 401 from Henkel Corporation, Rocky Hill, CT. 2. Toughened ethyl cyanoacrylate based one-part adhesive composition incorporating rubber mothers, commercially available as LOCTITE 435 from Henkel Corporation, Rocky Hill, CT. 3. Standard purity graphite platelets (∼97% carbon content), available as T6-679 from Graftech Industries, Ltd., Cleveland, OH. 4. High purity graphite platelets (∼99% carbon content), available as TG-684HP from Graftech Industries, Ltd., Cleveland, OH. * non inventive examples | | | | | | | | | | | | | |

The compositions of Samples 1-13 thus prepared were tested for peel strength in accordance with procedures of the American Standard Test Methods (ASTM) No. D-903, the test method incorporated herein by reference. The substrates used for determining peel strength included grit blasted steel bonded to grit blasted flexible steel shims. The grit used to prepare the specimens was 80 mesh silicon carbide (SiC). The peel strength measurements for each of Samples 1-13 were compared with peel strength measurements for comparison cyanoacrylate compositions which included the cyanoacrylate component of Table 1 but without the graphite platelet components set forth in Table 1.

The performance advantages of 180° peel strength testing for the inventive Samples 1-13 as compared to comparison cyanoacrylate compositions are summarized in Table 2 below. The values reported for the change in peel strength represent the percentage difference in peel strength for the inventive Samples 1-13 as compared with comparison cyanoacrylate compositions which did not include any graphite platelet components.

**TABLE 2**

| **SAMPLE NO.** | **CHANGE IN PEEL STRENGTH (%)** |
|---|---|
| 1 | 50 |
| 2 | 61 |
| 3 | 503 |
| 4 | 189 |
| 5 | 265 |
| 6 | 440 |
| 7 | 36 |
| 8 | 27 to 35 |
| 9 | -5 to -2 |
| 10 | 33 |
| 11 | -19 to-9 |
| 12 | 64 to 70 |
| 13 | 27 |

The performance results of Samples 1-6 demonstrate that the addition of a graphite platelet material to a conventional cyanoacrylate composition dramatically increases the peel strength of the resultant cured adhesive composition. A drastic increase is seen at a load level of 1.0 pph graphite platelet material, with Samples 3 and 6 demonstrating increases of 503% and 440%, respectively, in peel strength when compared with the same cyanoacrylate composition without any graphite platelet materials.

The performance results of Samples 7-13 demonstrate that such increases in peel strength are also evidenced in cyanoacrylate compositions which include rubber tougheners. Such results suggest that an increase In peel strength is optimized at certain graphite platelet load levels, with the testing demonstrating a loading level of 1.0 pph of graphite platelet material achieving optimized peel strength when compared with the same cyanoacrylate composition without any graphite platelet materials.

### EXAMPLE 2

The shear strength of cyanoacrylate compositions Incorporating graphite platelet materials therein was measured. In particular, cyanoacrylate compositions were prepared as Samples 14 and 15 by incorporating 0.1 and 1%, respectively, of high purity graphite platelets (∼99% carbon content, available as TG-684HP from Graftech Industries, Ltd., Cleveland, OH) Into a cyanoacrylate adhesive composition, LOCTITE 435, commercially available from Henkel Corporation, Rocky Hill, CT. The compositions of Samples 14 and 15 were prepared by adding the indicated amount of graphite platelet material to the cyanoacrylate component, with stirring and under mild heating conditions until the graphite platelet material was homogenously dispersed within the composition.

The compositions thus prepared were tested for tensile shear strength, in accordance with ASTM No. D-1002, the test method Incorporated herein by reference. Tensile shear strength was determined using grit blasted mild steel lap shears bonded to each other and pulled in tension to failure after 0.5, 3, 6, 24, and 72 hours of cure at ambient conditions. Tensile shear strength measurements for each of Samples 14 and 15 were compared with tensile shear strength measurements for LOCTITE 435 without the graphite platelet components set forth in Table 1.

Such experimentation demonstrated that the values for tensile lap shear strength for inventive Samples 14 and 15 were very similar to the tensile lap shear strength for the comparison cyanoacrylate compositions (which did not include any graphite platelet components) over a broad range of cure times from 0.5 hours to 72 hours, as shown In Table 3. The inclusion of graphite platelet materials within cyanoacrylate compositions therefore does not deleteriously affect the tensile shear strength for such compositions. Such experimentation also demonstrated that the Incorporation of the graphite platelet materials into the cyanoacrylate compositions did not significantly decrease the cure time or strength development speeds for the compositions.

**TABLE 3**

| **SAMPLE** | **0.5 HR** | **3 HR** | **6 HR** | **24 HR** | **72 HR** |
|---|---|---|---|---|---|
| **LOCTITE 435** | 1743 | 2598 | 2912 | 3425 | 3397 |
| **14** | 1633 | 2643 | 2801 | 3177 | 3306 |
| **15** | 1645 | 2640 | 2836 | 3484 | 3110 |

### EXAMPLE 3

The block shear strength for certain polymeric materials was tested as follows. A cyanoacrylate composition was prepared as Sample 16 by incorporating 1% of standard purity graphite platelets (∼97% carbon content, available as TG-679 from Graftech Industries, Ltd., Cleveland, OH) Into a cyanoacrylate adhesive composition, LOCTITE 435, commercially available from Henkel Corporation, Rocky Hill, CT. The composition of Sample 16 was prepared by adding the indicated amount of graphite platelet material to the cyanoacrylate component, with mild heating if necessary, stirring and under mild heating conditions until the graphite platelet material was homogenously dispersed within the composition. The composition of Sample 16 was applied between various substrates, including polycarbonate and polyvinyl chloride, and tested for block shear strength in accordance with ASTM No. D-4501, the test method incorporated herein by reference.

The block shear strength measurements for Sample 16 between the various substrates were compared with block shear strength measurements for a comparison cyanoacrylate composition of LOCTITE 435 without the graphite platelet components. Significant increases in block shear strength were demonstrated, with an increase of 153% for polycarbonate substrates and an increase of 43% for polyvinylchloride substrates, when compared with the same cyanoacrylate composition without any graphite platelet materials.

### EXAMPLE 4

Fracture toughness was tested as follows. A cyanoacrylate composition was prepared as Sample 17 by Incorporating 1% of standard purity graphite platelets (∼97% carbon content, available as TG-679 from Graftech Industries, Ltd., Cleveland, OH) Into a cyanoacrylate adhesive composition, LOCTITE 411, commercially available from Henkel Corporation, Rocky Hill, CT. The composition of Sample 17 was prepared by adding the indicated amount of graphite platelet material to the cyanoacrylate component, with stirring and under mild heating conditions until the graphite platelet material was homogenously dispersed within the composition. The composition of Sample 17 was applied between chromic acid etched 7075 aluminum and tested for fracture toughness in accordance with ASTM Standard D-3433, the testing protocol incorporated herein by reference. The testing involved an aluminum double cantilever beam, at 0 mil induced bond gap.

The measurements for Sample 17 were compared with zero gap fracture toughness measurements for a comparison cyanoacrylate composition of LOCTITE 411 without the graphite platelet material. A significant increase of 111 % in fracture toughness was demonstrated, when compared with the same cyanoacrylate composition without any graphite platelet materials.

## Claims

1. A method of improving the toughness of a cyanoacrylate composition comprising incorporating a graphite platelet material into the cyanoacrylate composition prior to affecting cure of the cyanoacrylate composition, wherein the cyanoacrylate composition includes one or more rubber tougheners and the graphite platelet material is present in the composition in amounts of about 0.1 % by weight to about 2.0% by weight based on the total weight of the cyanoacrylate composition.

2. The method of Claim 1, wherein the rubber toughener is selected from the group consisting of (a) copolymers of a lower alkene monomer and (i) acrylic acid esters, (ii) methacrylic acid esters or (iii) vinyl acetate; (b) copolymers of methyl acrylate and ethylene; (c) reaction product of the combination of ethylene, methyl acrylate and monomers having carboxylic acid cure sites, which once formed is then substantially free of processing aids; and combinations thereof.

3. The method of Claim 1 and/or 2, wherein the graphite platelet material exhibits a platelet morphology having length and width dimensions of about 1 micrometer to about 100 micrometers, and having an average thickness of less than about 1 micrometer.

4. The method of any one of Claims 1 to 3, wherein the cyanoacrylate component comprises a compound represented by the formula: 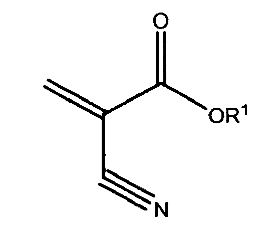 wherein R¹ represents a straight chain or branched chain substituted or unsubstituted alkyl group having 1 to 12 carbon atoms, a straight chain or branched chain substituted or unsubstituted alkenyl group having 2 to 12 carbon atoms, a straight chain or branched chain substituted or unsubstituted alkynyl group having 2 to 12 carbon atoms, a substituted or unsubstituted cycloalkyl group, an substituted or unsubstituted aralkyl group or a substituted or unsubstituted aryl group.

5. The method of any one of Claims 1 to 4, wherein R¹ is selected from the group consisting of a methyl group, an ethyl group, an n-propyl group, an isopropyl group, an n-butyl group, an isobutyl group, a pentyl group, a hexyl group, an allyl group, a methallyl group, a crotyl group, a propargyl group, a cyclohexyl group, a benzyl group, a phenyl group, a cresyl group, a 2-choroethyl group, a 3-choropropyl group, a 2-chorobutyl group, a trifluoroethyl group, a 2-methoxyethyl group, a 3-methoxybutyl group, a 2-ethoxyethyl group and combinations thereof.

6. A method of bonding two or more substrates comprising the steps of:
providing at least two substrates;
dispensing on a surface of one or both of the at least two substrates a cyanoacrylate adhesive composition comprising:
(a) at least one cyanoacrylate component;
(b) about 0.1% to about 2.0% by weight of a graphite platelet material; and
(c) one or more rubber tougheners selected from the group consisting of (a) copolymers of a lower alkene monomer and (i) acrylic acid esters, (ii) methacrylic acid esters or (iii) vinyl acetate; (b) copolymers of methyl acrylate and ethylene; (c) reaction product of the combination of ethylene, methyl acrylate and monomers having carboxylic acid cure sites, which once formed is then substantially free of processing aids; and combinations thereof;
contacting the surfaces of the at least two substrates having the cyanoacrylate adhesive composition thereon; and
exposing the cyanoacrylate adhesive composition to cure conditions, wherein the cured cyanoacrylate demonstrates one or more of improved peel strength, improved block shear strength, improved fracture toughness, and improved environmental resistance when compared to a similar cyanoacrylate adhesive composition without the graphite platelet material.

7. The method of Claim 6, wherein the composition includes about 0.1% by weight of graphite platelet material, and wherein the cured composition demonstrates more than a 50% increase in peel strength when compared with a similar cyanoacrylate composition which does not include any graphite platelet material.

8. The method of Claim 6, wherein the composition includes about 1.0% by weight of graphite platelet material, and wherein the cured composition demonstrates more than a 40% increase in block shear strength when compared with a similar cyanoacrylate composition which does not include any graphite platelet material.

9. The method of Claim 6 and/or 8, wherein the composition includes about 1.0% by weight of graphite platelet material, and wherein the cured composition demonstrates more than a 100% increase in fracture toughness when compared with a similar cyanoacrylate composition which does not include any graphite platelet material.

10. The method of Claim 6, 8 and/or 9, wherein the composition includes about 1.0% by weight of graphite platelet material, and wherein the cured composition demonstrates improved environmental resistance based on more than a 20% increase in lap shear strength after exposure to environmental aging conditions when compared with a similar cyanoacrylate composition which does not include any graphite platelet material.

## Patentansprüche

1. Verfahren zur Verbesserung der Zähigkeit einer Cyanoacrylatzusammensetzung, das das Einbinden eines Graphitplättchenmaterials in die Cyanoacrylatzusammensetzung vor dem Bewirken des Härtens der Cyanoacrylatzusammensetzung umfasst, wobei die Cyanoacrylatzusammensetzung ein oder mehrere Kautschukzähigkeitsmodifikatoren enthält und das Graphitplättchenmaterial in der Zusammensetzung in Mengen von etwa 0,1 Gew.-% bis etwa 2,0 Gew.-%, bezogen auf das Gesamtgewicht der Cyanoacrylatzusammensetzung, vorliegt.

2. Verfahren nach Anspruch 1, wobei der Kautschukzähigkeitsmodifikator aus der Gruppe bestehend aus (a) Copolymeren von einem Niederalkenmonomer und (i) Acrylsäurestern, (ii) Methacrylsäureestern oder (iii) Vinylacetat; (b) Copolymeren von Methylacrylat und Ethylen; (c) einem Reaktionsprodukt der Kombination von Ethylen, Methylacrylat und Monomeren mit Carbonsäure-Härtungsstellen, das nach der Bildung dann im Wesentlichen frei von Verarbeitungshilfsstoffen ist; und Kombinationen davon ausgewählt ist.

3. Verfahren nach Anspruch 1 und/oder 2, wobei das Graphitplättchenmaterial eine Plättchenmorphologie mit Längen- und Breitenabmessungen von etwa 1 Mikrometer bis etwa 100 Mikrometern und einer durchschnittlichen Dicke von weniger als 1 Mikrometer aufweist.

4. Verfahren nach einem der Ansprüche 1 bis 3, wobei die Cyanoacrylatkomponente eine Verbindung umfasst, die von der folgenden Formel dargestellt wird: 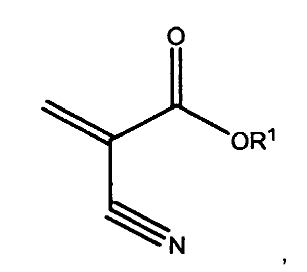 wobei R¹ für eine geradkettige oder verzweigtkettige, substituierte oder unsubstituierte Alkylgruppe mit 1 bis 12 Kohlenstoffatomen, eine geradkettige oder verzweigtkettige, substituierte oder unsubstituierte Alkenylgruppe mit 2 bis 12 Kohlenstoffatomen, eine geradkettige oder verzweigtkettige, substituierte oder unsubstituierte Alkinylgruppe mit 2 bis 12 Kohlenstoffatomen, eine substituierte oder unsubstituierte Cycloalkylgruppe, eine substituierte oder unsubstituierte Aralkylgruppe oder eine substituierte oder unsubstituierte Arylgruppe steht.

5. Verfahren nach einem der Ansprüche 1 bis 4, wobei R¹ aus der Gruppe bestehend aus einer Methylgruppe, einer Ethylgruppe, einer n-Propylgruppe, einer Isopropylgruppe, einer n-Butylgruppe, einer Isobutylgruppe, einer Pentylgruppe, einer Hexylgruppe, einer Allylgruppe, einer Methallylgruppe, einer Crotylgruppe, einer Propargylgruppe, einer Cyclohexylgruppe, einer Benzylgruppe, einer Phenylgruppe, einer Cresylgruppe, einer 2-Chlorethylgruppe, einer 3-Chlorpropylgruppe, einer 2-Chlorbutylgruppe, einer Trifluorethylgruppe, einer 2-Methoxyethylgruppe, einer 3-Methoxybutylgruppe, einer 2-Ethoxyethylgruppe und Kombinationen davon ausgewählt ist.

6. Verfahren zum Verkleben von zwei oder mehr Substraten, das die folgenden Schritte umfasst:
Bereitstellen von mindestens zwei Substraten;
Abgeben einer Cyanoacrylat-Klebstoffzusammensetzung auf eine Oberfläche von einem oder beiden der mindestens zwei Substrate, wobei die Cyanoacrylat-Klebstoffzusammensetzung Folgendes umfasst:
(a) mindestens eine Cyanoacrylatkomponente;
(b) etwa 0,1 Gew.-% bis etwa 2,0 Gew.-% eines Graphitplättchenmaterials und
(c) einen oder mehrere Kautschukzähigkeitsmodifikatoren, der bzw. die aus der Gruppe bestehend aus (a) Copolymeren von einem Niederalkenmonomer und (i) Acrylsäurestern, (ii) Methacrylsäureestern oder (iii) Vinylacetat; (b) Copolymeren von Methylacrylat und Ethylen; (c) einem Reaktionsprodukt der Kombination von Ethylen, Methylacrylat und Monomeren mit Carbonsäure-Härtungsstellen, das nach der Bildung dann im Wesentlichen frei von Verarbeitungshilfsstoffen ist; und Kombinationen davon ausgewählt ist bzw. sind;
Inkontaktbringen der Oberflächen der mindestens zwei Substrate mit der Cyanoacrylat-Klebstoffzusammensetzung darauf und
Aussetzen der Cyanoacrylat-Klebstoffzusammensetzung gegenüber Härtungsbedingungen, wobei das gehärtete Cyanoacrylat im Vergleich zu einer ähnlichen Cyanoacrylat-Klebstoffzusammensetzung ohne das Graphitplättchenmaterial eine verbesserte Schälfestigkeit, eine verbesserte Blockscherfestigkeit, eine verbesserte Bruchzähigkeit und/oder eine verbesserte Beständigkeit gegenüber Umwelteinflüssen zeigt.

7. Verfahren nach Anspruch 6, wobei die Zusammensetzung etwa 0,1 Gew.-% Graphitplättchenmaterial enthält und wobei die gehärtete Zusammensetzung im Vergleich zu einer ähnlichen Cyanoacrylatzusammensetzung, die kein Graphitplättchenmaterial enthält, einen mehr als 50%-igen Anstieg der Schälfestigkeit zeigt.

8. Verfahren nach Anspruch 6, wobei die Zusammensetzung etwa 1,0 Gew.-% Graphitplättchenmaterial enthält und wobei die gehärtete Zusammensetzung im Vergleich zu einer ähnlichen Cyanoacrylatzusammensetzung, die kein Graphitplättchenmaterial enthält, einen mehr als 40%-igen Anstieg der Blockscherfestigkeit zeigt.

9. Verfahren nach Anspruch 6 und/oder 8, wobei die Zusammensetzung etwa 1,0 Gew.-% Graphitplättchenmaterial enthält und wobei die gehärtete Zusammensetzung im Vergleich zu einer ähnlichen Cyanoacrylatzusammensetzung, die kein Graphitplättchenmaterial enthält, einen mehr als 100%-igen Anstieg der Bruchzähigkeit zeigt.

10. Verfahren nach Anspruch 6, 8 und/oder 9, wobei die Zusammensetzung etwa 1,0 Gew.-% Graphitplättchenmaterial enthält und wobei die gehärtete Zusammensetzung im Vergleich zu einer ähnlichen Cyanoacrylatzusammensetzung, die kein Graphitplättchenmaterial enthält, eine verbesserte Beständigkeit gegenüber Umwelteinflüssen auf Grundlage eines mehr als 20%-igen Anstiegs der Überlappungsscherfestigkeit nach Aussetzung gegenüber Umweltalterungsbedingungen zeigt.

## Revendications

1. Procédé d'amélioration de la ténacité d'une composition de cyanoacrylate, comprenant le fait d'incorporer une matière de graphite sous la forme de plaquettes dans la composition de cyanoacrylate avant la mise en oeuvre du durcissement de la composition de cyanoacrylate, la composition de cyanoacrylate englobant un ou plusieurs agents de renforcement à base de caoutchouc et la matière de graphite sous la forme de plaquettes étant présente dans la composition dans des quantités d'environ 0,1 % en poids à environ 2,0 % en poids, basés sur le poids total de la composition de cyanoacrylate.

2. Procédé selon la revendication 1, l'agent de renforcement à base de caoutchouc est choisi parmi le groupe constitué par (a) des copolymères d'un monomère d'alcène inférieur et (i) d'esters d'acide acrylique, (ii) d'esters d'acide méthacrylique ou (iii) d'acétate de vinyle ; (b) des copolymères d'acrylate de méthyle et d'éthylène ; (c) un produit réactionnel de la combinaison d'éthylène, d'acrylate de méthyle et de monomère possédant des sites de durcissement à base d'acides carboxyliques, qui une fois obtenu est essentiellement exempt d'adjuvants de traitement ; ainsi que leurs combinaisons.

3. Procédé selon la revendication 1 et /ou 2, dans lequel la matière de graphite sous la forme de plaquettes manifeste une morphologie de plaquette possédant des dimensions en longueur et en largeur d'environ 1 µm à environ 100 µm et possédant une épaisseur moyenne inférieure à environ 1 µm.

4. Procédé selon l'une quelconque des revendications 1 à 3, dans lequel le composant de cyanoacrylate comprend un composé répondant à la formule : 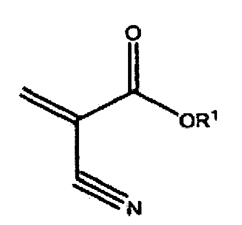 dans laquelle R¹ représente un groupe alkyle à chaîne droite ou à chaîne ramifiée, substitué ou non substitué, contenant de 1 à 12 atomes de carbone, un groupe alcényle à chaîne droite ou à chaîne ramifiée, substitué ou non substitué, contenant de 2 à 12 atomes de carbone, un groupe alcynyle à chaîne droite ou à chaîne ramifiée, substitué ou non substitué, contenant de 2 à 12 atomes de carbone, un groupe cycloalkyle substitué ou non substitué, un groupe aralkyle substitué ou non substitué ou un groupe aryle substitué ou non substitué.

5. Procédé selon l'une quelconque des revendications 1 à 4, dans lequel R¹ est choisi parmi le groupe constitué par un groupe méthyle, un groupe éthyle, un groupe n-propyle, un groupe isopropyle, un groupe n-butyle, un groupe isobutyle, un groupe pentyle, un groupe hexyle, un groupe allyle, un groupe methallyle, un groupe crotyle, un groupe propargyle, un groupe cyclohexyle, un groupe benzyle, un groupe phényle, un groupe crésyle, un groupe 2-chloroéthyle, un groupe 3-chloropropyle, un groupe 2-chlorobutyle, un groupe trifluoroéthyle, un groupe 2-méthoxyéthyle, un groupe 3-méthoxybutyle, un groupe 2-éthoxyéthyle, ainsi que leurs combinaisons.

6. Procédé de liaison par collage de deux substrats ou plus comprenant les étapes dans lesquelles :
on procure au moins deux substrats ;
on répartit sur la surface d'un substrat ou des deux substrats parmi lesdits au moins deux substrats, une composition d'adhésif à base de cyanoacrylate, comprenant :
(a) au moins un composant de cyanoacrylate ;
(b) une matière de graphite sous la forme de plaquettes à concurrence d'environ 0,1 % à environ 2,0 % en poids ; et
(c) un ou plusieurs agents de renforcement à base de caoutchouc choisis parmi le groupe constitué par (a) des copolymères d'un monomère d'alcène inférieur et (i) d'esters d'acide acrylique, (ii) d'esters d'acide méthacrylique ou (iii) d'acétate de vinyle ; (b) des copolymères d'acrylate de méthyle et d'éthylène ; (c) un produit réactionnel de la combinaison d'éthylène, d'acrylate de méthyle et de monomère possédant des sites de durcissement à base d'acides carboxyliques, qui une fois obtenu est essentiellement exempt d'adjuvants de traitement ; ainsi que leurs combinaisons ;
on met en contact les surfaces desdits au moins deux substrats, sur lesquelles se trouve la composition d'adhésif à base de cyanoacrylate ; et
on expose la composition d'adhésif à base de cyanoacrylate à des conditions de durcissement, le cyanoacrylate à l'état durci manifestant une ou plusieurs améliorations choisies parmi une meilleure résistance au pelage, une meilleure résistance au cisaillement par compression, une meilleure ténacité à la rupture et une meilleure résistance aux conditions environnementales, lorsqu'on compare à une composition similaire d'adhésif à base de cyanoacrylate qui n'englobe aucune matière de graphite sous la forme de plaquettes.

7. Procédé selon la revendication 6, dans lequel la composition englobe une matière de graphite sous la forme de plaquettes à concurrence d'environ 0,1 % en poids, et dans lequel la composition à l'état durci manifeste une augmentation supérieure à 50 % de la résistance au pelage, lorsqu'on compare à une composition similaire d'adhésif à base de cyanoacrylate qui n'englobe aucune matière de graphite sous la forme de plaquettes.

8. Procédé selon la revendication 6, dans lequel la composition englobe une matière de graphite sous la forme de plaquettes à concurrence d'environ 1,0 % en poids, et dans lequel la composition à l'état durci manifeste une augmentation supérieure à 40 % de la résistance au cisaillement par compression, lorsqu'on compare à une composition similaire d'adhésif à base de cyanoacrylate qui n'englobe aucune matière de graphite sous la forme de plaquettes.

9. Procédé selon les revendications 6 et/ou 8, dans lequel la composition englobe une matière de graphite sous la forme de plaquettes à concurrence d'environ 1,0 % en poids, et dans lequel la composition à l'état durci manifeste une augmentation supérieure à 100 % de la ténacité à la rupture, lorsqu'on compare à une composition similaire d'adhésif à base de cyanoacrylate qui n'englobe aucune matière de graphite sous la forme de plaquettes.

10. Procédé selon les revendications 6, 8 et/ou 9, dans lequel la composition englobe une matière de graphite sous la forme de plaquettes à concurrence d'environ 1,0 % en poids, et dans lequel la composition à l'état durci manifeste une résistance améliorée aux conditions environnementales sur base d'une augmentation supérieure à 20 % de la résistance au cisaillement avec recouvrement simple, après exposition à des conditions de vieillissement environnemental, lorsqu'on compare à une composition similaire d'adhésif à base de cyanoacrylate qui n'englobe aucune matière de graphite sous la forme de plaquettes.
